# EUROPEAN PATENT APPLICATION

(11) **EP 4 513 775 A1**
(43) Date of publication of application: **26.02.2025**
(21) Application number: 23791041.9
(22) Date of filing: 06.04.2023
(51) Int. Cl.: H04B 7/0417

(54) **INFORMATION TRANSMISSION METHOD AND APPARATUS, AND STORAGE MEDIUM**

(30) Priority: 22.04.2022 CN 202210429669
(71) Applicant: Datang Mobile Communications Equipment Co., Ltd., Beijing 100085 (CN)
(72) Inventor: SU, Yuwan, Beijing 100085 (CN); FEI, Yongqiang, Beijing 100085 (CN)
(74) Representative: Studio Torta S.p.A.
(86) International application number: PCT/CN2023/086584
(87) International publication number: WO 2023/202385

(57) **Abstract**

The present disclosure provides an information transmission method and apparatus, and a storage medium. The method includes: determining feedback indication information; determining first information according to the feedback indication information and a target first AI model, where the target first AI model is one of X1 first AI models included in a terminal; sending the first information to a base station, where the first information is used to determine input data of a target second AI model, and the target second AI model is one of X2 second AI models included in the base station. This method reduces the storage overhead and maintenance complexity of AI models.

## Description

The present disclosure claims the priority of the Chinese patent application No. 202210429669.7, entitled "INFORMATION TRANSMISSION METHOD AND APPARATUS, AND STOREAGE MEDIUM" filed with the China National Intellectual Property Administration on April 22, 2022, the entire contents of which are incorporated by reference in the present disclosure.

### TECHNICAL FIELD

The present disclosure relates to the field of communication technology and, in particular, to an information transmission method and apparatus, and a storage medium.

### BACKGROUND

There are many challenges in a wireless communication system, such as a nonlinear problem, a time complexity of an optimal solution calculation, difficulty in accurately characterizing some problems with formulas or models, impossibility of overall optimization due to an accumulation of errors among different modules in a wireless link, and increased difficulty in finding an optimization due to changes in non-ideal factors in practical applications, and the like. At present, both academic research and 3GPP are exploring usage of artificial intelligence (Artificial Intelligence, AI)/machine learning (Machine Learning, ML) to solve various problems in the wireless communication system. In NR Rel-17, research on the AI/ML has begun for the FS-NR_ENDC_data_collet project. In NR Rel-18, further research will be conducted on potential of the AI/ML in a physical layer of an air interface, such as improving performance indicators (e.g., throughput, accuracy, reliability, and robustness), and reducing resource overhead.

At present, in any practical application scenario, if the AI is needed to solve the problem in the wireless communication system, multiple sets of AI models which are in a one-to-one correspondence need to be deployed on both UE and gNB sides to meet different information transmission requirements between the UE and gNB, resulting in high storage overheads and maintenance complexity of the AI models.

### SUMMARY

The present disclosure provides an information transmission method and apparatus, and a storage medium.

In a first aspect, an embodiment of the present disclosure provides an information transmission method applied to a terminal, where the terminal includes X1 first AI models, and the method includes:
determining feedback indication information;
determining first information according to the feedback indication information and a target first AI model, where the target first AI model is one of the X1 first AI models;
sending the first information to a base station, where the first information is used to determine input data of a target second AI model, and the target second AI model is one of X2 second AI models included in the base station;
where X1 is greater than or equal to 1, X2 is greater than or equal to 1, and X1 is not equal to X2.

In one implementation, the determining the feedback indication information includes:
determining the feedback indication information according to a first parameter.

In one implementation, the first parameter includes at least one of a reference signal quality RSRQ, a reference signal power RSRP, a signal-to-noise ratio SNR/SINR, a received signal strength indicator RSSI, a bit error rate BER, a block error rate BLER, or a modulation and coding strategy MCS.

In one implementation, the determining the feedback indication information includes:
acquiring the second AI model;
determining the feedback indication information according to the first AI model and the second AI model.

In one implementation, the determining the feedback indication information includes:
determining the target first AI model from the X1 first AI models;
determining the feedback indication information according to the target first AI model.

In one implementation, the determining feedback indication information includes:
receiving the feedback indication information sent by the base station.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the output data of the target first AI model included in the first information corresponds to the feedback indication information.

In one implementation, X1 is greater than 1, and bits for output data of the X1 first AI models are same in number.

In one implementation, further including:
sending the feedback indication information to the base station.

In one implementation, X1 is greater than 1, and after the determining the feedback indication information, the method further includes:
determining the target first AI model from the X1 first AI models according to the feedback indication information.

In one implementation, X2 is greater than 1, the target second AI model corresponds to the feedback indication information.

In a second aspect, an embodiment of the present disclosure provides an information transmission method applied to a base station, where the base station includes X2 second AI models, and the method includes:
determining feedback indication information;
determining input data of a target second AI model according to the feedback indication information and first information sent by a terminal, where the first information is determined by the terminal according to the feedback indication information and a target first AI model, the target second AI model is one of the X2 second AI models, and the target first AI model is one of X1 first AI models in the terminal;
where X1 is greater than or equal to 1, X2 is greater than or equal to 1, and X1 is not equal to X2.

In one implementation, the method further includes:
determining the target second AI model from the X2 second AI models according to the feedback indication information.

In one implementation, the determining the feedback indication information includes:
determining the target second AI model from the X2 second AI models;
determining the feedback indication information according to the target second AI model.

In one implementation, the determining feedback indication information includes:
receiving the feedback indication information sent by the terminal.

In one implementation, further including:
sending the feedback indication information to the terminal.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the first information corresponds to the feedback indication information.

In one implementation, X2 is greater than 1, and bits for input data of respective second AI models in the X2 second AI models are different in number.

In one implementation, the determining the input data of the target second AI model according to the feedback indication information and the first information sent by the terminal includes:
determining the number of bits for the first information according to the feedback indication information;
determining the input data of the target second AI model according to the number of bits for the input data of the target second AI model and the number of bits for the first information.

In one implementation, the determining the input data of the target second AI model according to the number of bits for the input data of the target second AI model and the number of bits for the first information, including:
determining the number of bits M for second information according to the number of bits for the input data of the target second AI model and the number of bits for the first information, to determine the second information;
determining the input data of the target second AI model according to the first information and the second information.

In one implementation, the second information is a bit string consisting of M zeroes, where M is a difference between the number of bits for the input data of the target second AI model and the number of bits for the first information.

In a third aspect, the present disclosure provides an information transmission apparatus applied to a terminal, where the terminal includes X1 first AI models, the apparatus includes a memory, a transceiver, and a processor:
the memory is configured to store a computer program;
the transceiver is configured to transmit and receive data under control of the processor;
the processor is configured to read the computer program stored in the memory and perform the following operations:
   determining feedback indication information;
   determining first information according to the feedback indication information and a target first AI model, where the target first AI model is one of the X1 first AI models;
   sending the first information to a base station, where the first information is used to determine input data of a target second AI model, and the target second AI model is one of X2 second AI models included in the base station;
   where X1 is greater than or equal to 1, X2 is greater than or equal to 1, and X1 is not equal to X2.

In one implementation, the processor is configured to perform the following operations:
determining the feedback indication information according to a first parameter.

In one implementation, the first parameter includes at least one of a reference signal quality RSRQ, a reference signal power RSRP, a signal-to-noise ratio SNR/SINR, a received signal strength indicator RSSI, a bit error rate BER, a block error rate BLER or a modulation and coding strategy MCS.

In one implementation, the processor is configured to perform the following operations:
acquiring the second AI model;
determining the feedback indication information according to the first AI model and the second AI model.

In one implementation, the processor is configured to perform the following operations:
determining the target first AI model from the X1 first AI models;
determining the feedback indication information according to the target first AI model.

In one implementation, the processor is configured to perform the following operations:
receiving the feedback indication information sent by the base station.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the output data of the target first AI model included in the first information corresponds to the feedback indication information.

In one implementation, X1 is greater than 1, and bits for output data of the X1 first AI models are same in number.

In one implementation, the processor is configured to perform the following operations:
sending the feedback indication information to the base station.

In one implementation, X1 is greater than 1, the processor is configured to perform the following operations:
determining the target first AI model from the X1 first AI models according to the feedback indication information.

In one implementation, X2 is greater than 1, the target second AI model corresponds to the feedback indication information.

In a fourth aspect, the present disclosure provides an information transmission apparatus applied to a base station, where the base station includes X2 second AI models, and the apparatus includes a memory, a transceiver, and a processor:
the memory is configured to store a computer program;
the transceiver is configured to transmit and receive data under control of the processor;
the processor is configured to read the computer program stored in the memory and perform the following operations:
   determining feedback indication information;
   determining input data of a target second AI model according to the feedback indication information and first information sent by a terminal, where the first information is determined by the terminal according to the feedback indication information and a target first AI model, the target second AI model is one of the X2 second AI models, and the target first AI model is one of X1 first AI models in the terminal;
   where X1 is greater than or equal to 1, X2 is greater than or equal to 1, and X1 is not equal to X2.

In one implementation, the processor is configured to perform the following operations:
determining the target second AI model from the X2 second AI models according to the feedback indication information.

In one implementation, the processor is configured to perform the following operations:
determining the target second AI model from the X2 second AI models;
determining the feedback indication information according to the target second AI model.

In one implementation, the processor is configured to perform the following operations:
receiving the feedback indication information sent by the terminal.

In one implementation, the processor is configured to perform the following operations:
sending the feedback indication information to the terminal.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the first information corresponds to the feedback indication information.

In one implementation, X2 is greater than 1, and bits for input data of respective second AI models in the X2 second AI models are different in number.

In one implementation, the processor is configured to perform the following operations:
determining the number of bits for the first information according to the feedback indication information;
determining the input data of the target second AI model according to the number of bits for the input data of the target second AI model and the number of bits for the first information.

In one implementation, the processor is configured to perform the following operations:
determining the number of bits M for second information according to the number of bits for the input data of the target second AI model and the number of bits for the first information, to determine the second information;
determining the input data of the target second AI model according to the first information and the second information.

In one implementation, the second information is a bit string consisting of M zeroes, where M is a difference between the number of bits for the input data of the target second AI model and the number of bits for the first information.

In a fifth aspect, the present disclosure provides an information transmission apparatus applied to a terminal, where the terminal includes X1 first AI models, and the apparatus includes:
a first determining unit, configured to determine feedback indication information;
a second determining unit, configured to determine first information according to the feedback indication information and a target first AI model, where the target first AI model is one of the X1 first AI models;
a sending unit, configured to send the first information to a base station, where the first information is used to determine input data of a target second AI model, and the target second AI model is one of X2 second AI models included in the base station;
where X1 is greater than or equal to 1, X2 is greater than or equal to 1, and X1 is not equal to X2.

In one implementation, the first determining unit is configured to:
determine the feedback indication information according to a first parameter.

In one implementation, the first parameter includes at least one of a reference signal quality RSRQ, a reference signal power RSRP, a signal-to-noise ratio SNR/SINR, a received signal strength indicator RSSI, a bit error rate BER, a block error rate BLER, or a modulation and coding strategy MCS.

In one implementation, the first determining unit is configured to:
acquire the second AI model;
determine the feedback indication information according to the first AI model and the second AI model.

In one implementation, the first determining unit is configured to:
determine the target first AI model from the X1 first AI models;
determine the feedback indication information according to the target first AI model.

In one implementation, the first determining unit is configured to:
receive the feedback indication information sent by the base station.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes some or all of output data of the target first AI model.

In one implementation, the number of bits for the output data of the target first AI model included in the first information corresponds to the feedback indication information.

In one implementation, X1 is greater than 1, and bits for output data of the X1 first AI models are same in number.

In one implementation, the sending unit is further configured to:
send the feedback indication information to the base station.

In one implementation, X1 is greater than 1, and the apparatus further includes:
a third determining unit, configured to determine the target first AI model from the X1 first AI models according to the feedback indication information.

In one implementation, X2 is greater than 1, the target second AI model corresponds to the feedback indication information.

In a sixth aspect, the present disclosure provides an information transmission apparatus applied to a base station, where the base station includes X2 second AI models, and the apparatus includes:
a first determining unit, configured to determine feedback indication information;
a second determining unit, configured to determine input data of a target second AI model according to the feedback indication information and first information sent by a terminal, where the first information is determined by the terminal according to the feedback indication information and a target first AI model, the target second AI model is one of the X2 second AI models, and the target first AI model is one of X1 first AI models in the terminal;
where X1 is greater than or equal to 1, X2 is greater than or equal to 1, and X1 is not equal to X2.

In one implementation, the apparatus further includes a third determining unit, configured to:
determine the target second AI model from the X2 second AI models according to the feedback indication information.

In one implementation, the first determining unit is configured to:
determine the target second AI model from the X2 second AI models;
determine the feedback indication information according to the target second AI model.

In one implementation, the first determining unit is configured to:
receive the feedback indication information sent by the terminal.

In one implementation, the apparatus further includes:
a sending unit, configured to send the feedback indication information to the terminal.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the first information corresponds to the feedback indication information.

In one implementation, X2 is greater than 1, bits for input data of respective second AI models in the X2 second AI models are different in number.

In one implementation, the second determining unit is configured to:
determine the number of bits for the first information according to the feedback indication information;
determine the input data of the target second AI model according to the number of bits for the input data of the target second AI model and the number of bits for the first information.

In one implementation, the second determining unit is configured to:
determine the number of bits M for second information according to the number of bits for the input data of the target second AI model and the number of bits for the first information, to determine the second information;
determine the input data of the target second AI model according to the first information and the second information.

In one implementation, the second information is a bit string consisting of M zeroes, where M is a difference between the number of bits for the input data of the target second AI model and the number of bits for the first information.

In a seventh aspect, the present disclosure provides a computer-readable storage medium, where the computer-readable storage medium stores a computer program, and the computer program is used for causing a computer to execute the method described in the first aspect.

The present disclosure provides the information transmission method and apparatus, and the storage medium. In the method, a terminal determines information to be transmitted to a base station according to feedback indication information and an AI model on a terminal side; the base station determines input data of an AI model on the base station side according to the feedback indication information and the information sent by the terminal; the AI models on the terminal side and the base station side do not need to maintain a one-to-one correspondence, thus reducing the number of AI models deployed on the terminal side or the base station side, reducing storage overhead and maintenance complexity of the AI models.

It should be understood that, content described in the above summary section is not intended to limit key or important features of embodiments of the present invention, nor is it intended to limit a scope of the present invention. Other features of the present invention will become easily understood through the following description.

### BRIEF DESCRIPTION OF DRAWINGS

In order to provide a clearer explanation of technical solutions disclosed in the present disclosure or the prior art, a brief introduction will be given to accompanying drawings required for describing embodiments or existing technologies. It is obvious that the accompanying drawings described below are some embodiments of the present invention. For those skilled in the art, other drawings can be obtained based on these drawings without paying creative labor.
FIG. 1 is a diagram showing a CSI feedback scenario based on an AI model.
FIG. 2 is a flowchart of an information transmission method provided by an embodiment of the present disclosure.
FIG. 3 is a diagram I of a CSI feedback scenario based on an AI model provided by an embodiment of the present disclosure.
FIG. 4 is a diagram II of a CSI feedback scenario based on an AI model provided by an embodiment of the present disclosure.
FIG. 5 is a diagram I of model training and inference provided by an embodiment of the present disclosure.
FIG. 6 is a diagram III of a CSI feedback scenario based on an AI model provided by an embodiment of the present disclosure.
FIG. 7 is a diagram II of a model training and inference provided by an embodiment of the present disclosure.
FIG. 8 is a structural diagram I of an information transmission apparatus provided by an embodiment of the present disclosure.
FIG. 9 is a structural diagram II of a channel transmission apparatus provided by an embodiment of the present disclosure.
FIG. 10 is a structural diagram III of an information transmission apparatus provided by an embodiment of the present disclosure.
FIG. 11 is a structural diagram IV of an information transmission apparatus provided by an embodiment of the present disclosure.

### DESCRIPTION OF EMBODIMENTS

A term "and/or" in the present disclosure describes an association relationship between related objects, indicating that there can be three types of relationships. For example, A and/or B, can represent: A exists alone, A and B exist simultaneously, and B exists alone. A character "/" generally indicates that objects related back and forth are in an "or" relationship. The term "multiple" in an embodiment of the present disclosure refers to being two or more objects, similar to other quantifiers.

The following will provide a clear and complete description of technical solutions in embodiments of the present disclosure in conjunction with accompanying drawings in the embodiments of the present disclosure. Obviously, the described embodiments are only a part of the disclosed embodiments and not all of them. Based on the embodiments disclosed in the present disclosure, all other embodiments obtained by ordinary skilled persons in the art without paying creative labor are within a protection scope of the present disclosure.

The embodiments of the present disclosure provide an information transmission method and apparatus that reduce the storage overhead and maintenance complexity of models. Among them, the method and apparatus are based on the same application concept. Since principles following which the method and apparatus solve problems are similar, reference can be made to each other for the method and apparatus embodiments, the repetition will not be repeated.

The technical solution provided by the embodiments of the present disclosure can be applied to various systems, especially 5G systems. For example, an applicable system may include a global system of mobile communication (Global System of Mobile Communication, GSM), a code division multiple access (Code Division Multiple Access, CDMA) system, a wideband code division multiple access (Wideband Code Division Multiple Access, WCDMA) general packet radio service (General Packet Radio Service, GPRS) system, a long term evolution (Long Term Evolution, LTE) system, an LTE frequency division duplex (LTE Frequency Division Duplex, FDD) system, an LTE time division duplex (LTE Time Division Duplex, TDD) system, a long term evolution advanced (Long Term Evolution Advanced, LTE-A) system, a universal mobile telecommunications system (Universal Mobile Telecommunications system, UMTS), a worldwide interoperability for microwave access (Worldwide Interoperability for Microwave Access, WiMAX) system, a 5G New Radio, an NR system and the like. All of these systems include terminal devices and network devices. The system can also include core network parts, such as an evolved packet system (Evolved Packet System, EPS), a 5G system (5G System, 5GS) and the like.

The terminal device involved in the embodiments of the present disclosure may refer to a device that provides voice and/or data connectivity to users, a handheld device with wireless connection capabilities, or other processing devices connected to a wireless modem. In different systems, names of the terminal device may also vary. For example, in the 5G systems, the terminal device can be referred to as a user equipment (User Equipment, UE). A wireless terminal device can communicate with one or more core networks (Core Network, CN) via a radio access network (Radio Access Network, RAN), and can be a mobile terminal device such as a mobile phone (also known as a "cellular" phones) and a computer with a mobile terminal device, such as portable, pocket sized, handheld, computer built-in, or vehicle mounted mobile devices that exchange language and/or data with the radio access network. For example, devices such as personal communication service (Personal Communication Service, PCS) phones, cordless phones, session initiation protocol (Session Initiation Protocol, SIP) phones, wireless local loop (Wireless Local Loop, WLL) stations, personal digital assistants (Personal Digital Assistant, PDA), and the like. Wireless terminal devices can also be referred to as systems, subscriber units (subscriber unit), subscriber stations (subscriber station), mobile stations (mobile station), mobiles (mobile), remote stations (remote station), access points (access point), remote terminals (remote terminal), access terminals (access terminal), user terminals (user terminal), user agents (user agent), or user devices (user device), which are not limited in the embodiments of the present disclosure.

The base station involved in the embodiments of the present disclosure may include multiple cells that provide services to terminals. Depending on a specific application scenario, the base station can also be referred to as an access point, or it can be a device in an access network that communicates with a wireless terminal device through one or more sectors over an air interface, or it can have other names. For example, the base station involved in the embodiments of the present disclosure may be an evolutional node B (evolutional node B, eNB or e-NodeB) in a long term evolution (long term evolution, LTE) system, a 5G base station (gNB) in a 5G network architecture (next generation system), or a home evolved node B (Home evolved Node B, HeNBs), a relay node (relay node), a femto (femto), a pico (pico) and the like, which are not limited in the embodiments of the present disclosure. In some network architectures, the base station may include a centralized unit (centralized unit, CU) node and a distributed unit (distributed unit, DU) node, which can also be geographically separated.

The base station and the terminal device can each use one or more antennas for a multi input multi output (Multi Input Multi Output, MIMO) transmission, which can be a single user MIMO (Single User MIMO, SU-MIMO) or a multiple user MIMO (Multiple User MIMO, MU-MIMO). Depending on the form and number of antenna combinations, the MIMO transmission can be a 2D-MIMO, a 3D-MIMO, an FD-MIMO, or a massive MIMO, as well as a diversity transmission, a precoding transmission, a beamforming transmission and the like.

In the following, applications of AI models in the wireless communication system will be introduced in the first place. AI research at the physical layer of NR Rel-18 mainly identified several use cases, such as channel state information (Channel State Information, CSI) feedback, beam management, localization, channel estimation and the like. Take the CSI feedback as an example, UE obtains CSI information by measuring a channel state information reference signal (CSI-RS) and feeds back the CSI information to the gNB. Using the AI model for the CSI feedback can reduce cost of the CSI feedback or improve an accuracy of channel recovery. For different feedback granularities of the CSI feedback, multiple sets of AI models which are in a one-to-one correspondence should be deployed on both the UE and gNB sides. At this point, the accuracy of channel recovery is high, but both from perspectives of UE and gNB, the storage overhead and maintenance complexity of the AI models are relatively high.

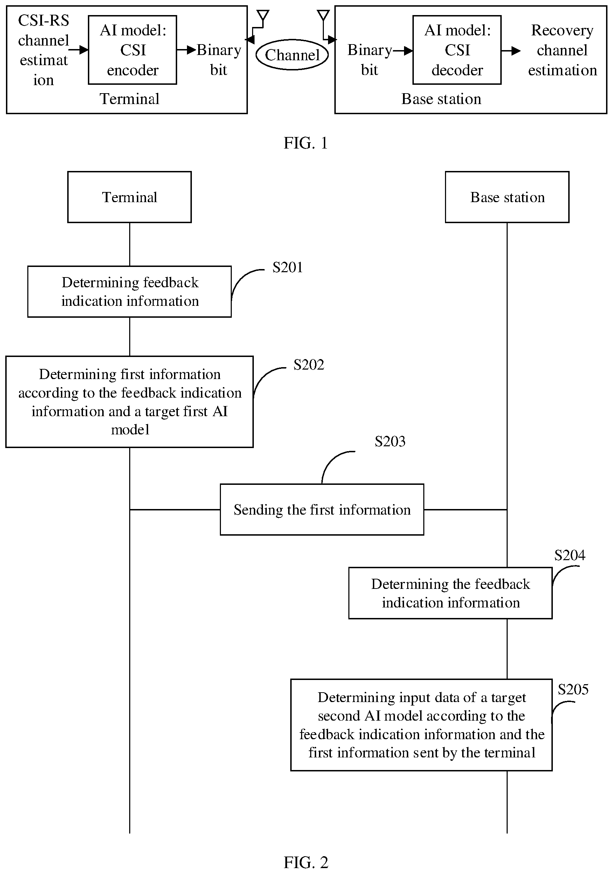

For example, as shown in FIG. 1, it is a diagram of a CSI feedback scenario based on AI models. In the figure, an encoder and a decoder are taken as example for showing the AI models, and the encoder and decoder can be considered as two AI models or two components of one AI model. The UE can perform channel estimation by measuring the CSI-RS and input the channel estimation into a CSI encoder as the AI model to obtain CSI information or a part of the CSI information that needs to be fed back (the CSI information can include multiple parts such as CQI, PMI, RI, and the like), and perform qualification on the information to obtain binary bit data. Furthermore, the UE feeds back the quantized CSI information to the gNB. After receiving the quantized binary bit data, the gNB performs inverse-qualification for converting the data into the real field and inputs it into a CSI decoder as the AI model to obtain a recovered channel estimation. Due to different feedback granularities of the CSI feedback, specifically numbers of bits used for quantization of the CSI information are different, thus multiple sets of AI models which are in a one-to-one correspondence need to be deployed on both UE and gNB sides. Each set of corresponding AI models corresponds to a feedback granularity, in order to meet transmission requirements of the multiple feedback granularities. In this way, both from perspectives of UE and gNB, the storage overhead and maintenance complexity of the AI models are relatively high.

Similar to the CSI feedback introduced above, in other application scenarios, output data of the AI model on a terminal side will be used as input data of the AI model on a base station side. However, there are also multiple information transmission requirements for information transmission between the UE and gNB, which requires the deployment of multiple sets of AI models which are in a one-to-one correspondence on the UE and gNB sides. Each set of corresponding AI models meets one information transmission requirement, resulting in high storage overhead and maintenance complexity of the AI models.

To this end, an embodiment of the present disclosure proposes an information transmission method, in which UE determines information to be transmitted to a gNB based on feedback indication information and an AI model on the UE side; the gNB determines input data of one AI model on the gNB side based on the feedback indication information and the information sent by the UE. The AI models on the UE side and the gNB side do not need to maintain a one-to-one correspondence, thus reducing the number of AI models deployed on the UE side or the gNB side, and reducing the storage overhead and maintenance complexity of the AI models.

In the following, the information transmission method provided in the present disclosure will be explained in detail through specific embodiments. It can be understood that the following specific embodiments can be combined with each other, and the same or similar concepts or processes may not be repeated in some embodiments.

FIG. 2 is a flowchart of an information transmission method provided by an embodiment of the present disclosure. As shown in FIG. 2, the method includes:
S201, a terminal determines feedback indication information.

The feedback indication information can be used to indicate an information transmission requirement when the terminal feeds back information to a base station, so that the terminal can determine information that needs to be fed back to the terminal based on the feedback indication information. The feedback indication information can be determined by the terminal itself, or it can be determined by the base station. In the latter case, this step includes the terminal receiving the feedback indication information sent by the base station.

S202, the terminal determines first information according to the feedback indication information and a target first AI model, where the target first AI model is one of X1 first AI models in the terminal.

The terminal determines the first information which needs to be sent to the base station according to the feedback indication information and the target first AI model in the terminal. The first information may include part or all of output data of the target first AI model, or the first information may include data obtained by processing part or all of the output data of the target first AI model.

S203, the terminal sends the first information to the base station, where the first information is used to determine input data of a target second AI model, and the target second AI model is one of X2 second AI models included in the base station.

X1 is greater than or equal to 1, X2 is greater than or equal to 1, and X1 is not equal to X2.

It can be understood that in the case where the terminal determines the feedback indication information on its own, the terminal also sends the feedback indication information to the base station. Optionally, the terminal can send the first information and the feedback indication information separately through different resources.

S204, the base station determines the feedback indication information.

In the case where the feedback indication information is determined by the terminal on its own, this step refers to the base station receiving the feedback indication information sent by the terminal; or, in the case where the feedback indication information is determined by the base station, this step is executed before S201, that is, the base station first determines the feedback indication information and then sends the feedback information to the terminal.

S205, the base station determines the input data of the target second AI model according to the feedback indication information and the first information sent by the terminal.

After determining the first information, the terminal sends the first information to the base station; and the base station determines the input data of the target second AI model on a base station side according to the feedback indication information and the first information. The target first AI model is one of the X1 first AI models in the terminal, and the target second AI model is one of the X2 second AI models included in the base station. However, the target first AI model and the target second AI model do not need to be deployed one-to-one, and there is no necessary correspondence between the two. The first information transmitted between the terminal and the base station is determined by the terminal according to the feedback indication information and the target first AI model in the terminal, while the base station can determine the input data of the target second AI model in the base station based on the feedback indication information and the first information. Thus, the terminal side and base station side can flexibly deploy their AI models, thus reducing the number of AI models, lowering storage overhead and maintenance complexity of the AI models.

The terminal involved in the embodiments of the present disclosure includes X1 first AI models, and the base station includes X2 second AI models. Optionally, the first AI model can be used to generate the information that needs to be transmitted to the base station from the terminal. For example, the first AI model can be used to encode the input data to generate the information that needs to be transmitted to the base station, while the second AI model can be used to process the information transmitted from the terminal to the base station, such as decoding the information transmitted from the terminal to the base station.

For example, in the CSI feedback scenario based on the AI models shown in FIG. 1, an input of the first AI model is channel estimation, and an output of the first AI model is CSI information or a part of CSI information (the CSI information can include multiple parts such as CQI, PMI, RI, and the like), then the first information is the CSI information or a part of the CSI information. An input of the second AI model is the CSI information or a part of the CSI information, and an output of the second AI model is recovered channel estimation.

On the basis of the above embodiments, further explanation will be given on how to determine the feedback indication information.

Optionally, the terminal determines the feedback indication information according to a first parameter. Optionally, the first parameter includes at least one of a reference signal receiving quality (Reference Signal Receiving Quality, RSRQ), a reference signal receiving power (Reference Signal Receiving Power, RSRP), a signal to noise ratio (Signal to Noise Ratio, SNR) or a signal to interference plus noise ratio (Signal to Interference plus Noise Ratio, SINR), a received signal strength indication (Received Signal Strength Indication, RSSI), a bit error rate (Bit Error Rate, BER), a block error rate (Block Error Rate, BLER), or a modulation and coding scheme (Modulation and Coding Scheme, MCS). The terminal determines the feedback indication information based on the above parameter(s), and then determines, based on the feedback indication information, the first information that needs to be fed back to the base station, thus making the first information which will be fed back better match a current channel state, signal quality or the like, and improving an accuracy of data recovery on the base station side.

Optionally, the terminal acquires the second AI model and determines the feedback indication information according to the first AI model and the second AI model. Among them, the first AI model can be part or all of the X1 first AI models included in the terminal, and the second AI model can be part or all of the X2 second AI models included in the base station. The terminal can perform multiple times of joint inference on the first AI model and the second AI model to determine a model with the highest accuracy, and determine the corresponding feedback indication information according to the model with the highest accuracy. The terminal performs the joint inference based on the first AI model and the second AI model, and finally determines the feedback indication information according to the model with the highest accuracy, and then determines the first information that needs to be fed back to the base station based on the feedback indication information, thereby achieving the highest accuracy in data recovery by the base station.

Optionally, the terminal determines the target first AI model from the X1 first AI models, and determines the feedback indication information according to the target first AI model. That is, there is a correspondence between the first AI models and feedback indication information. The terminal first determines the target first AI model, and then determines the feedback indication information based on the corresponding relationship between the first AI models and the feedback indication information. It can be understood that the terminal can also first use the aforementioned method to determine the feedback indication information or receive the feedback indication information sent by the base station, and then determine the target first AI model from the X1 first AI models according to the feedback indication information.

Optionally, the feedback indication information can be determined by the base station, that is, the base station determines the target second AI model from the X2 second AI models, and determines the feedback indication information according to the target second AI model. That is, there is a correspondence between the second AI models and feedback indication information. The base station first determines the target second AI model, and then determines the feedback indication information based on the corresponding relationship between the second AI models and the feedback indication information.

Optionally, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

The feedback indication information represents the number of bits, the application scenario, or the encoding method of the first information fed back by the terminal to the base station. The first AI model or the second AI model can have correspondences with the aforementioned number of bits, application scenario, or encoding method. When determining the feedback indication information, the terminal and the base station can directly determine information related to the first information, the first AI model, or the second AI model through the feedback indication information, direct indication of the number of bits, application scenario, or encoding method of the first information is unnecessary. When the feedback indication information is determined by the terminal, the feedback indication information can be a model level of the target first AI model, a model identification of the target first AI model, a parameter of the target first AI model, or the target first AI model; when the feedback indication information is determined by the base station, the feedback indication information can be the model level of the target second AI model, the model identification of the target second AI model, the parameter of the target second AI model, or the target second AI model. When there are different pieces of feedback indication information, target first AI models can be different models in the X1 first AI models included in the terminal; and when there are different pieces of feedback indication information, target second AI models can be different models in the X2 second AI models included in the base station.

The first information includes the output data of the target first AI model. Optionally, the number of bits for the output data of the target first AI model included in the first information corresponds to the feedback indication information. That is, in the case of different feedback indication information, the numbers of bits for the first information determined by the terminal are different, and the number of bits for the first information corresponds to the feedback indication information.

Optionally, in the case where the number X1 of the first AI models included in the terminal is greater than 1, the numbers of bits for the output data of the X1 first AI models are different. Therefore, when the target first AI model corresponding to the feedback indication information is determined by the terminal, the number of bits for the first information is also determined.

Optionally, the target second AI model corresponds to the feedback indication information, that is, the base station determines the target second AI model from the X2 second AI models according to the feedback indication information, and then determines the input data of the target second AI model based on the first information.

Optionally, in the case where X2 is greater than 1, the numbers of bits for the input data of respective second AI models in the X2 second AI models are different. When the base station determines the input data of the target second AI model according to the feedback indication information and the first information, the base station determines the number of bits for the first information according to the feedback indication information; and determines the input data of the target second AI model according to the number of bits for the input data of the target second AI model and the number of bits for the first information.

Optionally, the base station determines the number of bits M for second information according to the number of bits for the input data of the target second AI model and the number of bits for the first information, in order to determine the second information; and determines the input data of the target second AI model according to the first information and second information, where the second information is a bit string consisting of M zeroes, and M is a difference between the number of bits for the input data of the target second AI model and the number of bits for the first information. Optionally, the second information can also be a bit string consisting of M ones, or can be a bit string of length M obtained by quantizing several other real numbers, where each bit in the bit string of length M is 0 or 1.

On the basis of the above embodiments, the information transmission method disclosed in the present disclosure will be explained with specific examples.

### Example 1

An example is taken for explanation where X1 is 1 and X2 is greater than 1 (that is, the terminal includes one first AI model, and the first AI model is also the target first AI model, and the base station includes multiple second AI models).

Step 1, the terminal determines feedback indication information.

The determining the feedback indication information by the terminal can be determining the feedback indication information by the terminal on its own or receiving the feedback indication information sent by the base station by the terminal.

Optionally, the determining the feedback indication information by the terminal on its own can be determining the feedback indication information according to the first parameter by the terminal as mentioned above, and distinguishing of the feedback indication information is related to a threshold of the first parameter. For example, as shown in Table 1, the feedback indication information includes X2 types, and the threshold of the first parameter corresponding to each type of the feedback indication information can be specified by the protocol or configured by the base station through a system message or a radio resource control (Radio Resource Control, RRC) message. Of course, the number of types of the feedback indication information that can be included may not be equal to X2.

**Table 1**

| Threshold range | Feedback indication information |
|---|---|
| First parameter<Threshold 1 | Feedback indication information 1 |
| Threshold 1=<First parameter<Threshold 2 | Feedback indication information 2 |
| ... | ... |
| Threshold X2-1< First parameter | Feedback indication information X2 |

Optionally, the determining the feedback indication information by the terminal on its own can be determining the feedback indication information according to the first AI model and the second AI model by the terminal. For example, the terminal can acquire some or all of the second AI models from the base station on the basis of acquiring the first AI model already, such as acquiring the second AI model(s) on the base station side through downloading. Assuming that the terminal has obtained all X2 second AI models, represented by Second AI model_1, Second AI model_2, ..., and Second AI model_X2, respectively. The terminal utilizes the first AI model and each second AI model of the multiple second AI models for joint inference. In different joint inferences, the input data of the first AI model is the same, for example, the input data of the first AI model is CSI-RS channel estimation. In different joint inferences, different pieces of first information are determined by the first AI model, as shown in Table 2 below. There is a one-to-one correspondence between the second AI models and the feedback indication information, the terminal determines a model with the highest accuracy according to the multiple joint inferences, and determines feedback indication information corresponding to the model with the highest accuracy.

**Table 2**

| Joint inference | Model | First information | Model accuracy | Feedback indication information |
|---|---|---|---|---|
| Joint inference_1 | First AI model + Second AI model_1 | First bit string in N information blocks | Accuracy _1 | Feedback indication information 1 |
| Joint inference_2 | First AI model + Second AI model _2 | First two bit strings in N information | Accuracy_2 | Feedback indication information 2 |
| | | blocks | | |
| ... | ... | ... | ... | ... |
| Joint inference X2 | First AI model + Second AI model _X2 | All bit strings in N information blocks | Accuracy_X2 | Feedback indication information X2 |

For example, if the model with the highest accuracy is First AI model+ Second AI model_2, then the terminal determines the feedback indication information as Feedback indication information 2. The terminal can determine the feedback indication information through the second AI model in the model with the highest accuracy, and the base station can also determine the target second AI model through the feedback indication information.

Optionally, the terminal receives the feedback indication information indicated by the base station through high-level signaling, or the terminal receives the feedback indication information indicated by the base station through downlink control information (Downlink Control Information, DCI) or a media access control control element (Media Access Control Control Element, MAC CE).

Step 2, the terminal determines the first information according to the feedback indication information and the first AI model, and sends the first information to the base station.

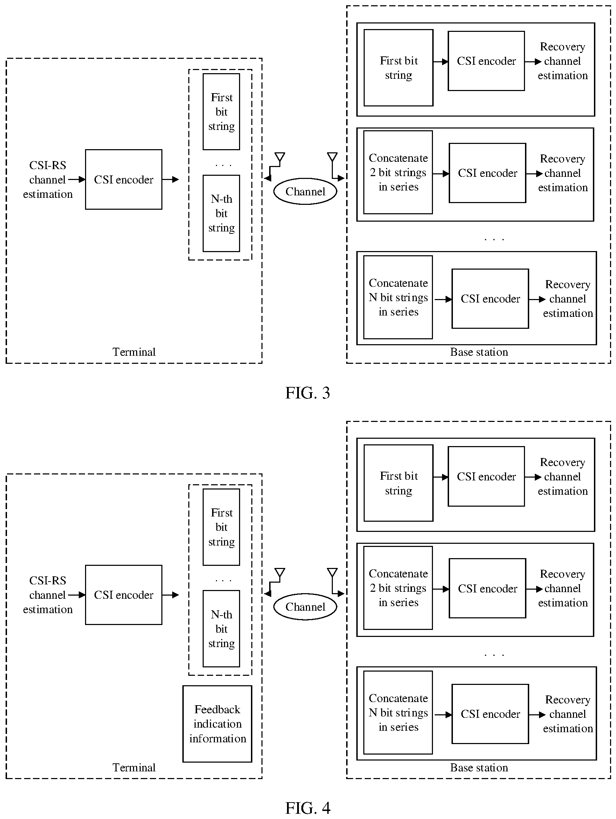

As shown in FIG. 3, the first AI model is illustrated as a CSI encoder, and there is only one CSI encoder model on the terminal side. The second AI model is illustrated as a CSI decoder, and there are multiple CSI decoder models on the base station side. The terminal determines the number of bits, the application scenario, or the encoding method of the output data of the first AI model included in the first information according to the feedback indication information. Taking different pieces of feedback indication information correspond to different numbers of bits for the first information in FIG. 3 as an example, assuming that the output of the first AI model includes N information blocks or bit strings, the terminal determines, according to the feedback indication information, that the first information includes one or more of the N information blocks. For example, for Feedback indication information 1, the first information includes a first bit string in N information blocks; for Feedback indication information 2, the first information includes the first and second bit strings in N information blocks, and so on. The terminal sends to the base station the first information determined according to a feedback level and the first AI model.

In the case where the feedback indication information is determined by the terminal, the terminal also sends the feedback indication information to the base station, as shown in FIG. 4, where the first information and the feedback indication information can be sent through different resources. Optionally, the terminal receives first configuration information of a first resource configured by the base station, the first resource is used for carrying the feedback indication information, and the terminal determines the first resource carrying the feedback indication information according to the first configuration information. The terminal sends the feedback indication information on the first resource, where the first resource can be a physical uplink control channel (Physical Uplink Control Channel, PUCCH) or a physical uplink shared channel (Physical Uownlink Shared Channel, PUSCH). Alternatively, feedback level information can be carried through signals on the first resource, such as a modulation reference signal (Modulation Reference Signal, DMRS), a sounding reference signal (Sounding Reference Signal, SRS), a physical random access channel (Physical Random Access Channel, PRACH), and the like. Different feedback levels correspond to different signal patterns (signal pattern) or different generated sequences.

In addition, it should be noted that when the feedback indication information is the model level of the first AI model, the model identification of the first AI model, the parameter of the first AI model or the first AI model, this step is that the terminal determines the first information according to the feedback indication information and sends the first information to the base station, or this step is that the terminal determines the first information according to the first AI model and sends the first information to the base station. Alternatively, when the feedback indication information is the model level of the target first AI model, the model identification of the target first AI model, the parameter of the target first AI model or the target first AI model, this step is that the terminal determines the first information according to the feedback indication information and sends the first information to the base station. Alternatively, this step is that the terminal determines the first information according to the target first AI model and sends the first information to the base station.

Step 3: the base station determines the input data of the target second AI model according to the feedback indication information and the first information.

Optionally, in the case where the feedback indication information is determined by the terminal, the base station receives the feedback indication information sent by the terminal and determines the target second AI model in the X2 second AI models according to the feedback indication information. For example, the feedback indication information is Feedback indication information 2, and the target second AI model is Second AI model_2, then the base station takes the first information as the input data of Second AI model_2.

Optionally, in the case where the feedback indication information is determined by the base station, the base station determines the feedback indication information and the corresponding target second AI model before Step 1, and sends the feedback indication information to the terminal. After receiving the first information, the base station determines the input data of the target second AI model according to the first information.

Optionally, the numbers of bits for the input data of different second AI models can vary, and there may be a one-to-one correspondence between the feedback indication information and the second AI models. Optionally, the numbers of bits for the input data of different second AI models can be the same. At this point, for different feedback indication information, the first AI model on the terminal side outputs the same number of bits for the first information, while the second AI models corresponding to different feedback indication information are applied to different application scenarios or encoding methods. For example, multiple second AI models can be respectively applied to scenarios such as Ultra reliable and Low Latency Communications (Ultra reliable and Low Latency Communications, URLLC), Reduced Capability (Reduced Capability, REDCAP), Enhanced Mobile Broadband (Enhanced Mobile Broadband, eMBB), and the like.

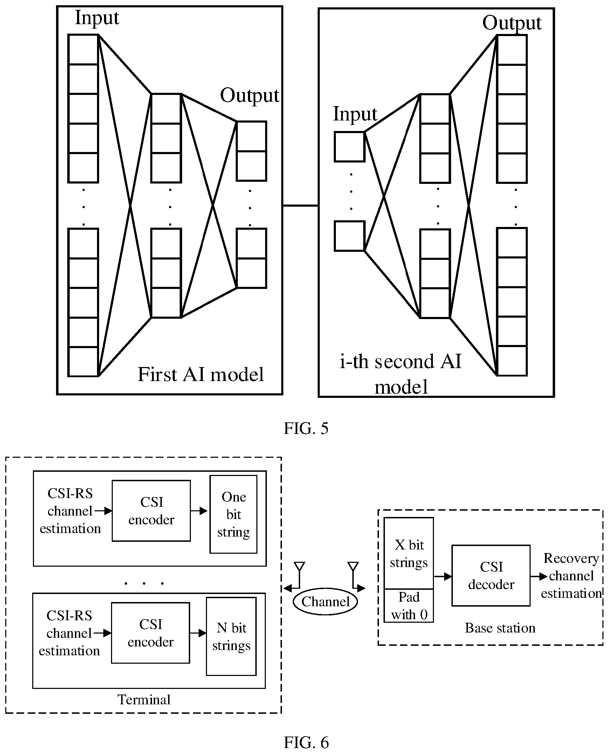

The AI model training and applying process in this embodiment will be described in conjunction with FIG. 5.

During the process of model training, for each training data in a training dataset, forward propagation process of a neural network is as follows:
Step 1: acquiring output data {x1, x2,..., xP} of length P from an output layer of the first AI model;
Step 2: acquiring first information {x1, x2,..., xQ} of length Q according to feedback indication information and the output data {x1, x2,..., xP} of length P, where Q is less than or equal to P;
Step 3: determining an i-th second AI model as a target second AI model according to the feedback indication information;
Step 4: using the first information of length Q as input data of the i-th second AI model, and acquiring an output of the i-th second AI model according to this input data.

Backward propagation process is as follows:
Step 5: determining an error of training data according to the output data of the i-th second AI model and a label of the training data;
Step 6: updating a weight of the i-th second AI model according to the error in Step 5 and calculating an error of an input layer of the i-th second AI model;
Step 7: padding P-Q zeroes to the error of the input layer of the i-th second AI model and determining an error of an output layer of the first AI model;
Step 8: updating a weight of the first AI model according to the error of the output layer of the first AI model.

In step 2 above, the output data {x1, x2,..., xP} of length P can include N information blocks, and the first information {x1, x2,..., xQ} of length Q is composed of one or more of the N information blocks. Each of the N information blocks can be composed of data output from continuous neurons in the output layer of the first AI model, such as {x1, x2, x3, x4,...}; each of the N information blocks can also be composed of data output from non-continuous neurons in the output layer of the first AI model, such as {x1, x3, x5, x7,...}.

From the training process, it can be seen that each training data in the training dataset will be input into the first AI model, but different training data will be input into different second AI models according to the feedback information.

In model applying process, for each pieces of data, forward propagation process is as follows:
Step 1: acquiring output data {x1, x2,..., xP} of length P from an output layer of the first AI model;
Step 2: acquiring first information {x1, x2,..., xQ} of length Q according to feedback indication information and the output data {x1, x2,..., xP} of length P, where Q is less than or equal to P;
Step 3: determining an i-th second AI model as a target second AI model according to the feedback indication information;
Step 4: using the first information of length Q as input data of the i-th second AI model, and acquiring an output of the i-th second AI model according to this input data.

According to the information transmission method in this embodiment, it can be seen that only one AI model needs to be deployed on the terminal side to achieve different information transmission requirements between the terminal and the base station, reducing the storage overhead and maintenance complexity of the AI model.

### Example 2

An example is taken for explanation where X2 is greater than 1 and X2 is 1 (that is, the terminal includes multiple first AI models, and the base station includes one second AI model, and the second AI model is also the target second AI model).

Step 1: the terminal determines feedback indication information.

The determining the feedback indication information by the terminal can be determining the feedback indication information by the terminal on its own or receiving the feedback indication information sent by the base station.

Similar to the previous example, alternatively, the determining the feedback indication information by the terminal on its own can be determining the feedback indication information according to the first parameter by the terminal, and distinguishing of the feedback indication information is related to the threshold of the first parameter.

Optionally, the feedback indication information can be determined by the terminal per se according to the first AI model and the second AI model. For example, the terminal can acquire the second AI model from the base station on the basis of the first AI model, such as acquiring the second AI model on the base station side by downloading. Assuming there are X1 first AI models on the terminal side, represented by First AI model_1, First AI model_2,..., First AI model_X1. The terminal utilizes each of the multiple first AI models and the second AI model for joint inference. In different joint inferences, the input data of the first AI model is the same. For example, the input data of the first AI model is CSI-RS channel estimation. In different joint inferences, different pieces of first information are determined by the first AI model, as shown in Table 3 below. There is a one-to-one correspondence between the first AI models and the feedback indication information. The terminal determines a model with the highest accuracy according to the multiple joint inferences, and determines feedback indication information corresponding to the model with the highest accuracy.

**Table 3**

| Joint inference | Model | Model accuracy | Feedback indication information |
|---|---|---|---|
| Joint inference_1 | First AI model_1 + Second AI model | Accuracy _1 | Feedback indication information 1 |
| Joint | First AI | Accuracy_2 | Feedback indication |
| inference_2 | model_2 + Second AI model | | information 2 |
| ... | ... | ... | ... |
| Joint inference X1 | First AI model_X1 + Second AI model | Accuracy_X1 | Feedback indication information X1 |

For example, if the model with the highest accuracy is First AI model_2+ second AI model, then the terminal determines the feedback indication information as Feedback indication information 2. The terminal can determine the feedback indication information through the first AI model in the model with the highest accuracy, and the base station can also determine the target second AI model through the feedback indication information.

Optionally, the terminal receives the feedback indication information indicated by the base station through high-level signaling, or the terminal receives the feedback indication information indicated by the base station through DCI or MAC CE.

Step 2: the terminal determines the first information according to the feedback indication information and the target first AI model, and sends the first information to the base station.

As shown in FIG. 6, the first AI model is illustrated as a CSI encoder, and there are multiple CSI encoder models on the terminal side. The second AI model is illustrated as a CSI decoder, and there is only one CSI decoder model on the base station side. The terminal determines the target first AI model among multiple first AI models according to the feedback indication information, and outputs the first information. For example, the terminal determines, according to the feedback level 1, the target first AI model to be First AI model_1 among the multiple first AI models. In the case where the feedback indication information is determined by the terminal, the terminal also sends the feedback indication information to the base station.

Optionally, the terminal can first determine the target first AI model among X1 first AI models, and then determine the feedback indication information according to the target first AI model. For example, the terminal determines that the target first AI model is First AI model_1 among the multiple first AI models, and determines the feedback indication information 1 according to the target first AI model.

Step 3: the base station determines input data of the second AI model according to the feedback indication information and the first information.

Assuming that the number of bits included in the input data of the second AI model is A, and the number of bits included in the first information is B, A is greater than or equal to B. When A is greater than B, the input data of the second AI model consists of the first information and second information, and the second information consists of M zeroes, where M=A-B. That is, the base station determines, according to the feedback indication information, that a length of bit numbers included in the first information is B, and adds M zeroes to the first information of length B to form the input data of the second AI model.

Optionally, the numbers of bits for the first information output by different first AI models are different. At this point, there may be a one-to-one correspondence between the feedback levels and the first AI models. Optionally, the numbers of bits for the first information output by different first AI models can be the same. In this case, different first AI models corresponding to different feedback indication information are model feedback indication information applied to different application scenarios. For example, multiple first AI models can be applied to URLLC, REDCAP, and eMBB scenarios respectively.

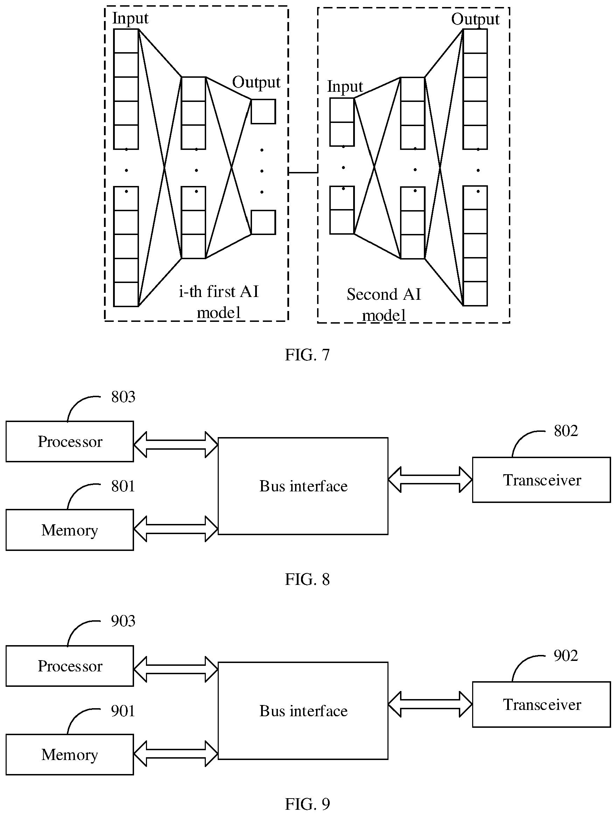

The AI model training and applying process in this embodiment will be described in combination with FIG. 7.

During the model training process, for each training data in the training dataset, the forward propagation process of the neural network is as follows:
Step 1: determining an i-th first AI model as a target first AI model based on feedback indication information;
Step 2: acquiring first information {xl, x2,..., xP1} of length P1 according to the i-th first AI model;
Step 3: acquiring input data {x1, x2,..., xQ1} of length Q1 of the second AI model according to the feedback indication information and the first information {x1, x2,..., xP1} of length P1, where Q1 is greater than or equal to P1;
Step 4: using {x1, x2,..., xQ1} of length Q1 as the input data of the second AI model, and acquiring an output of the second AI model according to this input data.

The back propagation process is as follows:
Step 5: determining an error of training data according to the output data of the second AI model and a label of the training data;
Step 6: updating a weight of the second AI model according to the error in Step 5 and calculating an error of an input layer of the second AI model;
Step 7: cutting the error of the input layer of the second AI model to obtain a portion of length P1, to determine an error of an output layer of the first AI model;
Step 8: updating a weight of the first AI model according to the error of the output layer of the first AI model.

As in Step 3 above, the input data {x1, x2,..., xQ1} of length Q1 of the second AI model is obtained based on the feedback indication information and the first information {x1, x2,..., xP1] of length P1. Positions of the first information in the input data of the second AI model can be continuous or discontinuous.

From the training process, it can be seen that each training data in the training dataset will be input into the second AI model, but different training data will be input into different first AI models according to the feedback indication information.

During the model applying process, for each pieces of data to be processed, the forward propagation process is as follows:
Step 1: determining an i-th first AI model as a target first AI model based on the feedback indication information;
Step 2: acquiring first information {x1, x2,..., xP1} of length P1 according to the i-th first AI model;
Step 3: acquiring input data {x1, x2,..., xQ1} of length Q1 of the second AI model according to the feedback indication information and the first information {x1, x2,..., xP1} of length P1, where Q1 is greater than or equal to P1;
Step 4: using {x1, x2,..., xQ1} of length Q1 as input data of the second AI model, and acquiring an output of the second AI model according to this input data.

According to the information transmission method in this embodiment, it can be seen that only one AI model needs to be deployed on the base station side to achieve different information transmission requirements between the terminal and the base station, reducing the storage overhead and maintenance complexity of the AI model.

FIG. 8 is a structural diagram I of an information transmission apparatus provided by an embodiment of the present disclosure. As shown in FIG. 8, the apparatus includes: a memory 801, a transceiver 802, and a processor 803.
the memory 801 is configured to store a computer program;
the transceiver 802 is configured to transmit and receive data under control of the processor;
the processor 803 is configured to read the computer program stored in the memory and perform the following operations:
   determining feedback indication information;
   determining first information according to the feedback indication information and a target first AI model, where the target first AI model is one of the X1 first AI models;
   sending the first information to a base station, where the first information is used to determine input data of a target second AI model, and the target second AI model is one of X2 second AI models included in the base station;
   where X1 is greater than or equal to 1, X2 is greater than or equal to 1, and X1 is not equal to X2.

In one implementation, the processor 803 is configured to perform the following operations:
determining the feedback indication information according to a first parameter.

In one implementation, the first parameter includes at least one of a reference signal quality RSRQ, a reference signal power RSRP, a signal-to-noise ratio SNR/SINR, a received signal strength indicator RSSI, a bit error rate BER, a block error rate BLER, or a modulation and coding strategy MCS.

In one implementation, the processor 803 is configured to perform the following operations:
acquiring the second AI model;
determining the feedback indication information according to the first AI model and the second AI model.

In one implementation, the processor 803 is configured to perform the following operations:
determining the target first AI model from the X1 first AI models;
determining the feedback indication information according to the target first AI model.

In one implementation, the processor 803 is configured to perform the following operations:
receiving the feedback indication information sent by the base station.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the output data of the target first AI model included in the first information corresponds to the feedback indication information.

In one implementation, X1 is greater than 1, and bits for output data of the X1 first AI models are same in number.

In one implementation, the processor 803 is configured to perform the following operations:
sending the feedback indication information to the base station.

In one implementation, X1 is greater than 1, the processor 803 is configured to perform the following operations:
determining the target first AI model from the X1 first AI models according to the feedback indication information.

In one implementation, X2 is greater than 1, the target second AI model corresponds to the feedback indication information.

It should be noted that the above-mentioned apparatus provided in the present disclosure can implement all method steps implemented by the terminal in the above-mentioned method embodiments, and can achieve the same technical effects. Therefore, specific descriptions of the same parts and beneficial effects as the method embodiments in this embodiment will not be repeated here.

FIG. 9 is a structural diagram II of an information transmission apparatus provided by an embodiment of the present disclosure. As shown in FIG. 9, the apparatus includes: a memory 901, a transceiver 902, and a processor 903.

The memory 901 is configured to store a computer program;
the transceiver 902 is configured to transmit and receive data under control of the processor;
the processor 903 is configured to read the computer program stored in the memory and perform the following operations:
   determining feedback indication information;
   determining input data of a target second AI model according to the feedback indication information and first information sent by a terminal, where the first information is determined by the terminal according to the feedback indication information and a target first AI model, the target second AI model is one of the X2 second AI models, and the target first AI model is one of X1 first AI models in the terminal;
   where X1 is greater than or equal to 1, X2 is greater than or equal to 1, and X1 is not equal to X2.

In one implementation, the processor 903 is configured to perform the following operations:
determining the target second AI model from the X2 second AI models according to the feedback indication information.

In one implementation, the processor 903 is configured to perform the following operations:
determining the target second AI model from the X2 second AI models;
determining the feedback indication information according to the target second AI model.

In one implementation, the processor 903 is configured to perform the following operations:
receiving the feedback indication information sent by the terminal.

In one implementation, the processor 903 is configured to perform the following operations:
sending the feedback indication information to the terminal.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the first information corresponds to the feedback indication information.

In one implementation, X2 is greater than 1, and bits for input data of respective second AI models in the X2 second AI models are different in number.

In one implementation, the processor 903 is configured to perform the following operations:
determining the number of bits for the first information according to the feedback indication information;
determining the input data of the target second AI model according to the number of bits for the input data of the target second AI model and the number of bits for the first information.

In one implementation, the processor 903 is configured to perform the following operations:
determining the number of bits M for second information according to the number of bits for the input data of the target second AI model and the number of bits for the first information, to determine the second information;
determining the input data of the target second AI model according to the first information and the second information.

In one implementation, the second information is a bit string consisting of M zeroes, where M is a difference between the number of bits for the input data of the target second AI model and the number of bits for the first information.

It should be noted that the above-mentioned apparatus provided by the present disclosure can implement all the method steps implemented by the base station in the above method embodiments, and can achieve the same technical effects. Therefore, specific descriptions of the same parts and beneficial effects as the method embodiments in this embodiment will not be repeated here.

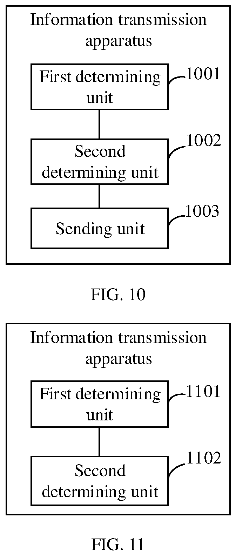

FIG. 10 is a structural diagram III of an information transmission apparatus provided by an embodiment of the present disclosure. As shown in FIG. 10, the apparatus includes:
a first determining unit 1001, configured to determine feedback indication information;
a second determining unit 1002, configured to determine first information according to the feedback indication information and a target first AI model, where the target first AI model is one of the X1 first AI models;
a sending unit 1003, configured to send the first information to a base station, where the first information is used to determine input data of a target second AI model, and the target second AI model is one of X2 second AI models included in the base station;
where X1 is greater than or equal to 1, X2 is greater than or equal to 1, and X1 is not equal to X2.

In one implementation, the first determining unit 1001 is configured to:
determine the feedback indication information according to a first parameter.

In one implementation, the first parameter includes at least one of a reference signal quality RSRQ, a reference signal power RSRP, a signal-to-noise ratio SNR/SINR, a received signal strength indicator RSSI, a bit error rate BER, a block error rate BLER, or a modulation and coding strategy MCS.

In one implementation, the first determining unit 1001 is configured to:
acquire the second AI model;
determine the feedback indication information according to the first AI model and the second AI model.

In one implementation, the first determining unit 1001 is configured to:
determine the target first AI model from the X1 first AI models;
determine the feedback indication information according to the target first AI model.

In one implementation, the first determining unit 1001 is configured to:
receive the feedback indication information sent by the base station.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes some or all of the output data of the target first AI model.

In one implementation, the number of bits for the output data of the target first AI model included in the first information corresponds to the feedback indication information.

In one implementation, X1 is greater than 1, and bits for output data of the X1 first AI models are same in number.

In one implementation, the sending unit 1003 is further configured to:
send the feedback indication information to the base station.

In one implementation, X1 is greater than 1, and the apparatus further includes:
a third determining unit, configured to determine the target first AI model from the X1 first AI models according to the feedback indication information.

In one implementation, X2 is greater than 1, the target second AI model corresponds to the feedback indication information.

It should be noted that the above-mentioned apparatus provided in the present disclosure can implement all method steps implemented by the terminal in the above-mentioned method embodiments, and can achieve the same technical effects. Therefore, specific descriptions of the same parts and beneficial effects as the method embodiments in this embodiment will not be repeated here.

FIG. 11 is a structural diagram IV of an information transmission apparatus provided by an embodiment of the present disclosure. As shown in FIG. 11, the apparatus includes:
a first determining unit 1101, configured to determine feedback indication information;
a second determining unit 1102, configured to determine input data of a target second AI model according to the feedback indication information and first information sent by a terminal, where the first information is determined by the terminal according to the feedback indication information and a target first AI model, the target second AI model is one of the X2 second AI models, and the target first AI model is one of X1 first AI models in the terminal;
where X1 is greater than or equal to 1, X2 is greater than or equal to 1, and X1 is not equal to X2.

In one implementation, the apparatus further includes a third determining unit, configured to:
determine the target second AI model from the X2 second AI models according to the feedback indication information.

In one implementation, the first determining unit 1101 is configured to:
determine the target second AI model from the X2 second AI models;
determine the feedback indication information according to the target second AI model.

In one implementation, the first determining unit 1101 is configured to:
receive the feedback indication information sent by the terminal.

In one implementation, the apparatus further includes:
a sending unit, configured to send the feedback indication information to the terminal.

In one implementation, the feedback indication information includes at least one of the following: the number of bits for the first information, a level corresponding to the number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

In one implementation, the first information includes part or all of output data of the target first AI model.

In one implementation, the number of bits for the first information corresponds to the feedback indication information.

In one implementation, X2 is greater than 1, and bits for input data of respective second AI models in the X2 second AI models are different in number.

In one implementation, the second determining unit 1102 is configured to:
determine the number of bits for the first information according to the feedback indication information;
determine the input data of the target second AI model according to the number of bits for the input data of the target second AI model and the number of bits for the first information.

In one implementation, the second determining unit 1102 is configured to:
determine the number of bits M for second information according to the number of bits for the input data of the target second AI model and the number of bits for the first information, to determine the second information;
determine the input data of the target second AI model according to the first information and the second information.

In one implementation, the second information is a bit string consisting of M zeroes, where M is a difference between the number of bits for the input data of the target second AI model and the number of bits for the first information.

It should be noted that the above-mentioned device apparatus in the present disclosure can implement all method steps implemented by the base station in the above method embodiments, and can achieve the same technical effects. Therefore, specific descriptions of the same parts and beneficial effects as the method embodiments in this embodiment will not be repeated here.

It should be noted that a division of units in embodiments of the present disclosure is illustrative and only a logical functional division. In actual implementation, there may be other division methods. In addition, various functional units in various embodiments in the present disclosure can be integrated into one processing unit, which can exist physically separately, or two or more units may be integrated into one unit. The integrated unit mentioned above can be implemented in a form of hardware or in the form of software functional unit.

If the integrated unit mentioned above is implemented in the form of software functional unit and sold or used as a stand-alone product, it can be stored in a processor-readable storage medium. Based on this understanding, essence of the technical solution of the present disclosure, a portion of which that contributes to the existing technology, or all or part of the technical solution can be embodied in the form of a software product, which is stored in a storage medium and includes several instructions used for enabling a computer device (which can be a personal computer, server, or network device, and the like) or a processor (processor) to execute all or part of steps of the method in the various embodiments of the present disclosure. The aforementioned storage medium includes various mediums that can store program codes, such as a USB flash drive, a portable hard drive, a read only memory (Read Only Memory, ROM), a random access memory (Random Access Memory, RAM), a magnetic disk or an optical disk.

An embodiment of the present disclosure also provides a computer-readable storage medium, which stores a computer program, and the computer program is used to enable a computer to execute the method executed by the terminal or base station in the above method embodiments.

The computer-readable storage media can be any available medium or data storage device that a computer can access, including but not limited to a magnetic storage (such as floppy disk, hard disk, magnetic tape, magneto-optical disk (MO) and the like), an optical storage (such as CD, DVD, BD, HVD and the like), and a semiconductor storage (such as ROM, EPROM, EEPROM, non-volatile memory (NAND FLASH), a solid state drive (SSD), and the like).

An embodiment of the present disclosure also provides a computer program product, including a computer program, when the computer program is executed by a processor, the method executed by the terminal or base station in the above method embodiments is implemented.

Those skilled in the art should understand that the embodiments of the present disclosure can be provided as methods, systems, or computer program products. Therefore, the present disclosure may take the form of a fully hardware implementation, a fully software implementation, or a combination of software and hardware implementation. Moreover, the present disclosure may take the form of the computer program product implemented on one or more computer usable storage mediums (including but not limited to the disk storage and optical storage) that containing computer usable program codes.

The present disclosure is described with reference to flowcharts and/or block diagrams of the method, device (system), and computer program product according to the embodiments of the present disclosure. It should be understood that each process and/or block in the flowchart and/or block diagram, as well as a combination of processes and/or blocks in the flowchart and/or block diagram, can be implemented by computer executable instructions. These computer executable instructions can be provided to the processor of a general-purpose computer, a specialized computer, an embedded processor, or other programmable data processing devices to generate a machine, enabling the instructions executed by the processor of the computer or other programmable data processing device to produce an apparatus for implementing functions specified in one or more processes in the flowchart and/or one or more boxes in the block diagram.

These processor-executable instructions can also be stored in a processor-readable memory that can guide a computer or other programmable data processing device to operate in a specific manner, such that the instructions stored in the processor-readable memory generate a manufactured product including instruction apparatus, and the instruction apparatus implements the functions specified in one or more processes in the flowchart, and/or one or more boxes in the block diagram.

These processor-executable instructions can also be loaded onto a computer or other programmable data processing device, enabling a series of operation steps to be performed on the computer or other programmable device to generate computer implemented processing. The instructions executed on the computer or other programmable device provide steps for implementing the functions specified in one or more processes in the flowchart and/or one or more boxes in the block diagram.

Obviously, those skilled in the art can make various modifications and variations to the present disclosure without departing from spirit and scope of the present disclosure. In this way, if these modifications and variations for the present disclosure fall within the scope of the claims and their equivalent technologies, then the present disclosure is also intended to include these modifications and variations.

## Claims

1. An information transmission method applied to a terminal, wherein the terminal comprises X1 first AI models, and the method comprises:
determining feedback indication information;
determining first information according to the feedback indication information and a target first AI model, wherein the target first AI model is one of the X1 first AI models;
sending the first information to a base station, wherein the first information is used to determine input data of a target second AI model, and the target second AI model is one of X2 second AI models comprised in the base station;
wherein X1 is greater than or equal to 1, X2 is greater than or equal to 1, and X1 is not equal to X2.

2. The method according to claim 1, wherein determining the feedback indication information comprises:
determining the feedback indication information according to a first parameter.

3. The method according to claim 2, wherein the first parameter comprises at least one of a reference signal quality RSRQ, a reference signal power RSRP, a signal-to-noise ratio SNR/SINR, a received signal strength indicator RSSI, a bit error rate BER, a block error rate BLER or a modulation and coding strategy MCS.

4. The method according to claim 1, wherein determining the feedback indication information comprises:
acquiring the second AI model;
determining the feedback indication information according to the first AI model and the second AI model.

5. The method according to claim 1, wherein determining the feedback indication information comprises:
determining the target first AI model from the X1 first AI models;
determining the feedback indication information according to the target first AI model.

6. The method according to claim 1, wherein determining the feedback indication information comprises:
receiving the feedback indication information sent by the base station.

7. The method according to any one of claims 1-6, wherein the feedback indication information comprises at least one of the following: a number of bits for the first information, a level corresponding to a number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

8. The method according to any one of claims 1-6, wherein the first information comprises part or all of output data of the target first AI model.

9. The method according to claim 8, wherein a number of bits for the output data of the target first AI model comprised in the first information corresponds to the feedback indication information.

10. The method according to claim 8, wherein X1 is greater than 1, and bits for output data of the X1 first AI models are same in number.

11. The method according to any one of claims 1-5, further comprising:
sending the feedback indication information to the base station.

12. The method according to any one of claims 1-6, wherein X1 is greater than 1, and after determining the feedback indication information, the method further comprises:
determining the target first AI model from the X1 first AI models according to the feedback indication information.

13. The method according to any one of claims 1-6, wherein X2 is greater than 1, the target second AI model corresponds to the feedback indication information.

14. An information transmission method applied to a base station, wherein the base station comprises X2 second AI models, and the method comprises:
determining feedback indication information;
determining input data of a target second AI model according to the feedback indication information and first information sent by a terminal, wherein the first information is determined by the terminal according to the feedback indication information and a target first AI model, the target second AI model is one of the X2 second AI models, and the target first AI model is one of X1 first AI models in the terminal;
wherein X1 is greater than or equal to 1, X2 is greater than or equal to 1, and X1 is not equal to X2.

15. The method according to claim 14, wherein the method further comprises:
determining the target second AI model from the X2 second AI models according to the feedback indication information.

16. The method according to claim 14, wherein determining the feedback indication information comprises:
determining the target second AI model from the X2 second AI models;
determining the feedback indication information according to the target second AI model.

17. The method according to claim 14, wherein determining feedback indication information comprises:
receiving the feedback indication information sent by the terminal.

18. The method according to any one of claims 14-16, further comprising:
sending the feedback indication information to the terminal.

19. The method according to any one of claims 14-17, wherein the feedback indication information comprises at least one of the following: a number of bits for the first information, a level corresponding to a number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

20. The method according to any one of claims 14-17, wherein the first information comprises part or all of output data of the target first AI model.

21. The method according to claim 20, wherein a number of bits for the first information corresponds to the feedback indication information.

22. The method according to any one of claims 14-17, wherein X2 is greater than 1, and bits for input data of respective second AI models in the X2 second AI models are different in number.

23. The method according to any one of claims 14-17, wherein determining the input data of the target second AI model according to the feedback indication information and the first information sent by the terminal comprises:
determining a number of bits for the first information according to the feedback indication information;
determining the input data of the target second AI model according to the number of bits for the input data of the target second AI model and the number of bits for the first information.

24. The method according to claim 23, wherein determining the input data of the target second AI model according to the number of bits for the input data of the target second AI model and the number of bits for the first information comprises:
determining a number of bits M for second information according to the number of bits for the input data of the target second AI model and the number of bits for the first information, to determine the second information;
determining the input data of the target second AI model according to the first information and the second information.

25. The method according to claim 24, wherein the second information is a bit string consisting of M zeroes, wherein M is a difference between the number of bits for the input data of the target second AI model and the number of bits for the first information.

26. An information transmission apparatus applied to a terminal, wherein the terminal comprises X1 first AI models, the apparatus comprises a memory, a transceiver, and a processor:
the memory is configured to store a computer program;
the transceiver is configured to transmit and receive data under control of the processor;
the processor is configured to read the computer program stored in the memory and perform the following operations:
determining feedback indication information;
determining first information according to the feedback indication information and a target first AI model, wherein the target first AI model is one of the X1 first AI models;
sending the first information to a base station, wherein the first information is used to determine input data of a target second AI model, and the target second AI model is one of X2 second AI models comprised in the base station;
wherein X1 is greater than or equal to 1, X2 is greater than or equal to 1, and X1 is not equal to X2.

27. The apparatus according to claim 26, wherein the processor is configured to perform the following operations:
determining the feedback indication information according to a first parameter.

28. The apparatus according to claim 27, wherein the first parameter comprises at least one of a reference signal quality RSRQ, a reference signal power RSRP, a signal-to-noise ratio SNR/SINR, a received signal strength indicator RSSI, a bit error rate BER, a block error rate BLER or a modulation and coding strategy MCS.

29. The apparatus according to claim 27, wherein the processor is configured to perform the following operations:
acquiring the second AI model;
determining the feedback indication information according to the first AI model and the second AI model.

30. The apparatus according to claim 27, wherein the processor is configured to perform the following operations:
determining the target first AI model from the X1 first AI models;
determining the feedback indication information according to the target first AI model.

31. The apparatus according to claim 27, wherein the processor is configured to perform the following operations:
receiving the feedback indication information sent by the base station.

32. The apparatus according to any one of claims 26-31, wherein the feedback indication information comprises at least one of the following: a number of bits for the first information, a level corresponding to a number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

33. An information transmission apparatus applied to a base station, wherein the base station comprises X2 second AI models, and the apparatus comprises a memory, a transceiver, and a processor:
the memory is configured to store a computer program;
the transceiver is configured to transmit and receive data under control of the processor;
the processor is configured to read the computer program stored in the memory and perform the following operations:
determining feedback indication information;
determining input data of a target second AI model according to the feedback indication information and first information sent by a terminal, wherein the first information is determined by the terminal according to the feedback indication information and a target first AI model, the target second AI model is one of the X2 second AI models, and the target first AI model is one of X1 first AI models in the terminal;
wherein X1 is greater than or equal to 1, X2 is greater than or equal to 1, and X1 is not equal to X2.

34. The apparatus according to claim 33, wherein the processor is configured to perform the following operations:
determining the target second AI model from the X2 second AI models according to the feedback indication information.

35. The apparatus according to claim 33, wherein the processor is configured to perform the following operations:
determining the target second AI model from the X2 second AI models;
determining the feedback indication information according to the target second AI model.

36. The apparatus according to claim 33, wherein the processor is configured to perform the following operations:
receiving the feedback indication information sent by the terminal.

37. The apparatus according to any one of claims 33-36, wherein the feedback indication information comprises at least one of the following: a number of bits for the first information, a level corresponding to a number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

38. The apparatus according to any one of claims 33-36, wherein the processor is configured to perform the following operations:
determining a number of bits for the first information according to the feedback indication information;
determining the input data of the target second AI model according to the number of bits for the input data of the target second AI model and the number of bits for the first information.

39. An information transmission apparatus applied to a terminal, wherein the terminal comprises X1 first AI models, and the apparatus comprises:
a first determining unit, configured to determine feedback indication information;
a second determining unit, configured to determine first information according to the feedback indication information and a target first AI model, wherein the target first AI model is one of the X1 first AI models;
a sending unit, configured to send the first information to a base station, wherein the first information is used to determine input data of a target second AI model, and the target second AI model is one of X2 second AI models comprised in the base station;
wherein X1 is greater than or equal to 1, X2 is greater than or equal to 1, and X1 is not equal to X2.

40. The apparatus according to claim 39, wherein the first determining unit is configured to:
determine the feedback indication information according to a first parameter.

41. The apparatus according to claim 40, wherein the first parameter comprises at least one of a reference signal quality RSRQ, a reference signal power RSRP, a signal-to-noise ratio SNR/SINR, a received signal strength indicator RSSI, a bit error rate BER, a block error rate BLER or a modulation and coding strategy MCS.

42. The apparatus according to claim 39, wherein the first determining unit is configured to:
acquire the second AI model;
determine the feedback indication information according to the first AI model and the second AI model.

43. The apparatus according to claim 39, wherein the first determining unit is configured to:
determine the target first AI model from the X1 first AI models;
determine the feedback indication information according to the target first AI model.

44. The apparatus according to claim 39, wherein the first determining unit is configured to:
receive the feedback indication information sent by the base station.

45. The apparatus according to any one of claims 39-44, wherein the feedback indication information comprises at least one of the following: a number of bits for the first information, a level corresponding to a number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

46. An information transmission apparatus applied to a base station, wherein the base station comprises X2 second AI models, and the apparatus comprises:
a first determining unit, configured to determine feedback indication information;
a second determining unit, configured to determine input data of a target second AI model according to the feedback indication information and first information sent by a terminal, wherein the first information is determined by the terminal according to the feedback indication information and a target first AI model, the target second AI model is one of the X2 second AI models, and the target first AI model is one of X1 first AI models in the terminal;
wherein X1 is greater than or equal to 1, X2 is greater than or equal to 1, and X1 is not equal to X2.

47. The apparatus according to claim 46, wherein the apparatus further comprises a third determining unit, configured to:
determine the target second AI model from the X2 second AI models according to the feedback indication information.

48. The apparatus according to claim 46, wherein the first determining unit is configured to:
determine the target second AI model from the X2 second AI models;
determine the feedback indication information according to the target second AI model.

49. The apparatus according to claim 46, wherein the first determining unit is configured to:
receive the feedback indication information sent by the terminal.

50. The apparatus according to any one of claims 46-49, wherein the feedback indication information comprises at least one of the following: a number of bits for the first information, a level corresponding to a number of bits for the first information, an application scenario corresponding to the first information or the target first AI model, an identification of an application scenario corresponding to the first information or the target first AI model, an encoding method corresponding to the first information or the target first AI model, an identification of an encoding method corresponding to the first information or the target first AI model, a model level of the target first AI model or the target second AI model, a model identification of the target first AI model or the target second AI model, a parameter of the target first AI model or the target second AI model, the target first AI model or the target second AI model.

51. The apparatus according to any one of claims 46-49, wherein the second determining unit is configured to:
determine a number of bits for the first information according to the feedback indication information;
determine the input data of the target second AI model according to the number of bits for the input data of the target second AI model and the number of bits for the first information.

52. A computer-readable storage medium, wherein the computer-readable storage medium stores a computer program, and the computer program is configured to enable a computer to execute the method according to any one of claims 1-25.
